(19) Europäisches Patentamt / European Patent Office / Office européen des brevets

(11) **EP 3 419 159 B1**

(12) **EUROPEAN PATENT SPECIFICATION**

(45) Date of publication and mention
of the grant of the patent:
**23.12.2020 Bulletin 2020/52**

(51) Int Cl.:
*H02N 2/06* (2006.01)    *H01F 7/18* (2006.01)
*G02B 26/08* (2006.01)

(21) Application number: **18178054.5**

(22) Date of filing: **15.06.2018**

(54) **ELECTRONIC CIRCUIT AND METHOD FOR MEASURING A PHYSICAL QUANTITY GENERATED BY AN ACTUATOR**

ELEKTRONISCHE SCHALTUNG UND VERFAHREN ZUR MESSUNG EINER DURCH EINEN AKTUATOR ERZEUGTEN PHYSIKALISCHEN GRÖSSE

CIRCUIT ÉLECTRONIQUE ET PROCÉDÉ POUR MESURER UNE QUANTITÉ PHYSIQUE PRODUITE PAR UN ACTIONNEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.06.2017 IT 201700067789**

(43) Date of publication of application:
**26.12.2018 Bulletin 2018/52**

(73) Proprietor: **Istituto Nazionale Di Astrofisica - INAF
00136 Roma (IT)**

(72) Inventor: **Biliotti, Valdemaro
00136 Roma (IT)**

(74) Representative: **Lisa, Elisabetta
Praxi Intellectual Property S.p.A.
Corso Vittorio Emanuele II, 3
10125 Torino (IT)**

(56) References cited:
**WO-A1-2016/198639        FR-A1- 2 850 219
US-A- 4 263 527              US-A- 4 841 191
US-A1- 2002 084 717**

• **MADEC P-Y: "Overview of Deformable Mirror Technologies for Adaptive Optics and Astronomy", ADAPTIVE OPTICS SYSTEMS III, 1-6 JULY 2012, AMSTERDAM; PROCEEDINGS OF SPIE, vol. 8447, 844705, 2012, pages 1-17, XP060028216, DOI: 10.1117/12.924892**

## Description

The present invention relates to an electronic circuit and relative method for measuring a physical quantity generated by an actuator, the impedance of said actuator varying according to such physical quantity. The present invention can be applied, preferably but not exclusively, to a deformable mirror for adaptive optics (for example in the terrestrial telescopes), said mirror comprising at least one actuator connected to said circuit.

In the current state of the art, actuators are electrically driven by the output signal of an amplifier in a non-inverting configuration, commonly known with the expression "driver amplifier" of the actuator. The latter is electrically connected to the output terminal of such amplifier and has an impedance which varies according to the physical quantity generated by the actuator itself. The physical law that binds the impedance of the actuator to the physical quantity generated by it is generally known, even if it differs depending on the type of actuator considered.

In order to be able to monitor such physical quantity, and consequently to monitor the operation of the actuator itself, it is common to use feedbacked circuits (also known as "closed loop" circuits), where the feedback signal is provided by suitable sensors which, being connected to the actuator, measure the physical quantity generated by it. In different applications, however, it may happen that the use of such sensors is impossible for dimensioning reasons either because the miniaturization of the circuit does not leave space for the insertion of a sensor, or for economic reasons because of the cost of the sensors themselves. An example of such applications is constituted by the deformable mirrors used in adaptive optics of large terrestrial telescopes to correct aberrations caused by the atmosphere. Such mirrors consist of an optical plate connected either to a plurality of piezoelectric actuators or to a plurality of permanent magnets coupled to a plurality of magnetic actuators. In this particular application, the physical quantity produced by the actuators is a mechanical quantity, and in particular, is the deformation of the mirrors to which the actuators are connected. The technological development of systems of deformable mirror goes more and more towards an increase in the number of actuators to correct aberrations with a greater speed and precision sensor and while maintaining the same level of deformation of the old-generation mirrors. The increase in the number of actuators inevitably involves the need of miniaturizing them and the circuits associated thereto. From here, the impossibility to use sensors for controlling the deformation of the new-generation mirrors.

Examples of known solutions are disclosed, for example in US 4 841 191, WO 2016/198639 A1 and US 2002/0084717 A1.

US 4 841191 refers to a piezoelectric actuator control apparatus comprising a capacitor connected in series with a piezoelectric actuator that has electrodes, and a control device that controls the voltage applied to the piezoelectric actuator such that the voltage of the capacitor will reach a predetermined value, particularly non-inverting operational amplifier circuits including the piezoelectric actuator or capacitor in the feedback loop, thereby obviating external position sensors.

WO 2016/198639 A1 relates to a similar piezoelectric actuator control device that can furthermore combine two types of piezoelectric actuator controls, a voltage control and a charge control; switching between the charge control and the voltage control is accomplished automatically, without adding switching elements, depending on the nature of the voltage applied to the input of the assembly.

US 2002/0084717 A1 concerns a piezo actuator drive circuit using a dual input non-inverting operational amplifier circuit with reconfigurable (charge, voltage) driving and sensing functionality, wherein the actuator is connected to GND.

The object of the present invention is, therefore, to measure the physical quantity generated by an actuator also in those situations where sensors cannot be used. Among these situations, by way of example only, the case of new-generation deformable mirrors of adaptive optics of terrestrial telescopes is cited. To this end, the present invention proposes to provide a method for measuring this quantity even without sensor and to design a circuit which allows implementing such method.

The impossibility of inserting sensors for monitoring the operation of the actuator also involves the further disadvantage of losing the feedback control of the circuit, which is carried out by the sensor itself. It is in fact known that when an actuator is controlled in feedback, the dynamic and static performances of the circuit are greater, i.e. the actuator responds with greater speed and precision than when it is controlled in an open loop.

Therefore, a second object of the present invention is to control an actuator in a closed loop even when the sensor may not be present. For this purpose, the present invention proposes to provide a method for controlling an actuator in a closed-loop even when it is not possible to use a real sensor and to provide a circuit which allows implementing this method.

These objects are achieved by the present invention by means of a method which involves determining the impedance of the actuator whose generated physical quantity needs to be known and, once obtained said impedance, calculating the physical quantity, the law correlating such impedance with the quantity being known, according to the independent claim 6. The implementation of such method is made possible by an electronic circuit according to the independent claim 1.

A further problem of actuator control systems is to make the measurement sensitivity independent of the control signal driving the inverting input of the "driver" amplifier of the actuator.

Another object of the present invention is, therefore, to provide a method and relative circuit allowing to obtain, without any real sensor, a measure of the physical quantity generated by an actuator with a sensitivity independent of the input signal at the non-inverting terminal of the "driver" amplifier of the actuator.

Such object is achieved by sending a signal, the so-called "reference signal" to the inverting terminal, said signal having an amplitude such as to not affect the quantity produced by the actuator, i.e. an amplitude not inducing a variation of the physical quantity higher than the measurement error of this quantity. The reference signal shall also have a frequency spectrum included in the passband of the frequency response of the driver amplifier and in the out-of-band of the frequency response of the actuator. In other words, the frequency range of the reference signal must be ranging the area in which the actuator response is cancelled, but is present, and the frequency response of the driver amplifier is constant.

Alternatively, the reference signal frequency, having the frequency characteristics specified above, may be sent directly to the non-inverting terminal. In this case, the input signal is given by the sum of two components: a first component, or control signal, and a second component, or reference signal, having very distinct and spaced apart frequency bands. Also in this case, the second component, or reference signal, should have an amplitude not to affect the physical quantity produced by the actuator, in order not to exceed the error measurement.

These and further purposes will be made clearer by the following detailed description of prior art embodiments for understanding, and a preferred embodiment of the present invention, by way of example and not limiting of the most general claimed concepts.

The following description refers to the accompanying figures, wherein:

- Figure 1 is an exemplary diagram of a state-of-the-art electronic circuit for measuring a physical quantity generated by an actuator;
- Figure 2a is a representation of a first embodiment of the electronic circuit which does not form the subject of the present invention;
- Figure 2b is a representation of a second embodiment of the electronic circuit which does not form the subject of the present invention;
- Figure 3a is a representation of a third embodiment of the electronic circuit which does not form the subject of the present invention;
- Figure 3b is a representation of a fourth embodiment of the electronic circuit which forms the subject of the present invention;

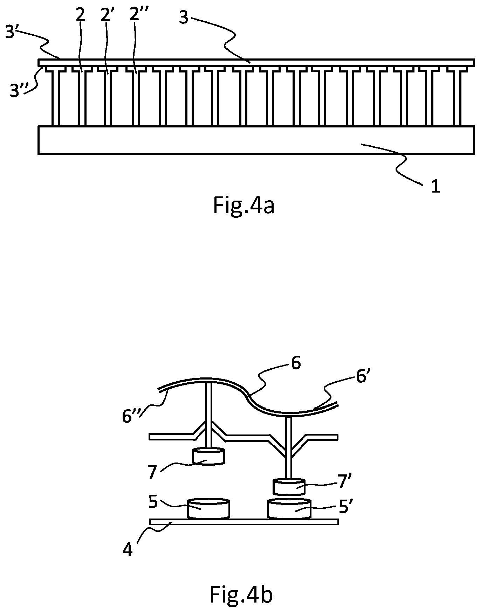

- Figure 4a is a schematic representation of a first application of the present invention relative to deformable mirrors equipped with piezoelectric actuators; and
- Figure 4b is a schematic representation of a second application of the present invention relative to deformable mirrors equipped with magnetic actuators.

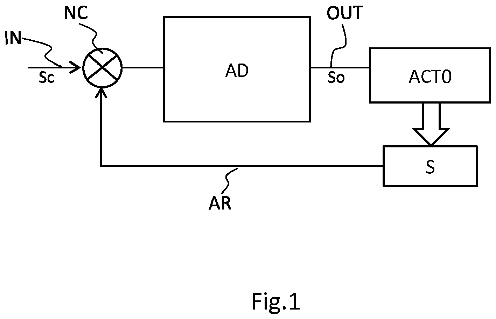

With reference to Figure 1, a state-of-the-art circuit for controlling an actuator and for measuring of the physical quantity generated by it comprises:

- an input terminal (IN) configured to receive an input signal or control signal (Sc);
- an output terminal (OUT) configured to issue an output signal (So);
- a feedback loop (AR) connecting a comparing node (NC) to said output terminal (OUT);
- an amplifier or "driver" amplifier (AD) connected to the input terminal (IN) and to the output terminal (OUT);
- an actuator (ACTO) configured to generate a physical quantity, said actuator being connected to said output terminal (OUT);
- a sensor (S) connected to said actuator (ACTO) and said comparing node (NC), said sensor (S) being placed along the feedback loop (AR).

Said sensor (S) is configured to measure the physical quantity generated by the actuator (ACTO) to which said sensor (S) is connected.

In state-of-the-art circuits, the input signal (Sc) arrives to the comparing node (NC), which calculates the difference with the signal coming from the sensor (S), said signal coming from the sensor (S) indicating the physical quantity generated by the actuator (ACT0). Such subtraction produces a signal which is amplified by the driver amplifier (AD) and sent to the actuator (ACT0).

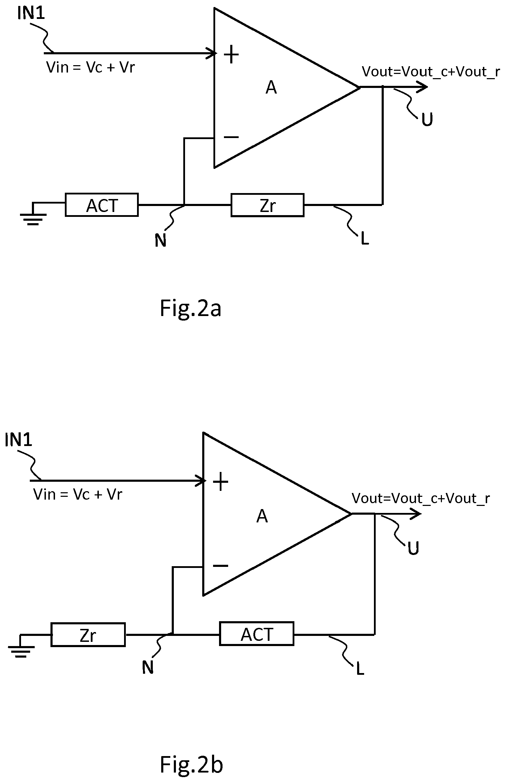

With reference to Figure 2a, a first embodiment of the circuit not part of the present invention comprises:

- an input terminal (IN1) configured to receive an input signal (Vin);
- an output terminal (U) configured to issue an output signal (Vout);
- a feedback loop (L) that connects an internal circuit node (N) to said output terminal (U);
- an amplifier (A) having a first terminal, or non-inverting terminal, connected to the input terminal (IN1), and a second terminal, or inverting terminal, connected to the node (N), said amplifier (A) being configured to receive in input said input signal (Vin) and to generate in output said output signal (Vout);
- a first impedance (Zr), or reference impedance, connected to said node (N) and to said output terminal (Vout); and
- an actuator (ACT) configured to generate a physical quantity, the impedance of said actuator (ACT), or second impedance, being dependent on said physical quantity.

A first terminal of said actuator (ACT) is connected to said internal circuit node (N) and a second terminal of said actuator (ACT) is connected to ground. The output signal (Vout) depends on the input signal (Vin), on the reference impedance (Zr) and on the impedance of the actuator (ACT).

In particular, the output signal *Vout* is given by the following equation:

$$Vout = Vin \left( 1 + \frac{Zr}{Zact} \right)$$

where *Vin* is the input signal, *Zr* is the reference impedance, and *Zact* is the impedance of the actuator (ACT).

From the previous equation, the impedance of the actuator (ACT) is calculated as hereinbelow:

$$Zact = \frac{VinZr}{Vout - Vin}$$

Once the impedance of the actuator (ACT) and the relationship existing between the impedance and physical quantity generated by the same actuator (ACT) are known, such quantity can be calculated. Some examples of relationships between the impedance of the actuator (ACT) and the physical quantity generated by the actuator (ACT), are listed hereinbelow.

Example 1

$$Zact = kG;$$

Example 2

$$Zact = k/G;$$

Example 3

$$Zact = Z_0(1 + kG);$$

Example 4

$$Zact = Z_0/(1 + kG).$$

where k and Zo are two constants and G is the physical quantity generated by the actuator (ACT).

In the first embodiment of the circuit, the input signal (Vin) is the sum of a first component, or control signal (Vc), and a second component, or reference signal (Vr). The output signal (Vout) is, in turn, a linear combination of a first component (Vout_r) dependent on the reference signal (Vr), and a second component (Vout_C) dependent on the control signal (Vc). Assuming to use a filter reducing all the signals different from the second component (Vout_r) of the output signal (Vout), including the noise voltage of the amplifier (A), the impedance of the actuator (ACT) becomes:

$$Zact = \frac{VrZr}{Vout\_r - Vr}$$

where *Vout_r* is the second component of the output signal *Vout,* and *Vr* is the reference signal.

The reference signal (Vr) must have a frequency band ranging between the maximum frequency of the frequency response of the actuator (ACT) and the cut-off frequency of the frequency response of the amplifier (A). Preferably, the lower limit of the frequency band of the reference signal (Vr) is at least twice the maximum frequency of the frequency response of the actuator (ACT).

Once the reference signal frequency (Vr) has been defined, since its amplitude depends on the physical quantity generated by the actuator, said amplitude has to be dimensioned so that the variation occurred in the quantity to be measured does not exceed the measurement error. Said error is obtained by multiplying the noise voltage *Vn* of the amplifier (A) by the measurement sensitivity of the physical quantity, said sensitivity being equal to the first derivative of the quantity measured with respect to the second component of the output signal.

In particular, in Example 1, since the physical quantity *G* is given by the following equation:

$$G = \frac{Vr}{Vout\_r - Vr} \frac{Zr}{k}$$

the error $\varepsilon$ is given by:

$$\varepsilon = \left| \frac{ZactVn(Zr + Zact)}{kVrZr} \right|$$

In Example 2, since the physical quantity *G* is given by the following equation:

$$G = \frac{Vout\_r - Vr}{Vr} \frac{k}{Zr}$$

the error $\varepsilon$ is given by:

$$\varepsilon = \left| \frac{kVn(Zr + Zact)}{VrZrZact} \right|$$

In Example 3, since the physical quantity *G* is given by the following equation:

$$G = \frac{ZrVr - Z_0(Vout\_r - Vr)}{kZ_0(Vout\_r - Vr)}$$

the error $\varepsilon$ is given by:

$$\varepsilon = \left| \frac{ZactVn(Zr + Zact)}{kVrZrZ_0} \right|$$

In Example 4, since the physical quantity *G* is given by the following equation:

$$G = \frac{Z_0(Vout\_r - Vr) - ZrVr}{kZrVr}$$

the error $\varepsilon$ is given by:

$$\varepsilon = \left| \frac{Z_0Vn(Zr + Zact)}{kVrZrZact} \right|$$

With reference to Figure 2b, a second embodiment of the circuit not part of the present invention comprises:

- an input terminal (IN1) configured to receive an input signal (Vin);
- an output terminal (U) configured to issue an output signal (Vout);
- a feedback loop (L) that connects an internal circuit node (N) to said output terminal (U);
- an amplifier (A) having a first terminal, or non-inverting terminal, connected to the first input terminal (IN1), and a second terminal, or inverting terminal, connected to the node (N), said amplifier (A) being configured to receive in input said input signal (Vin) and to generate in output said output signal (Vout);
- a first impedance (Zr), or reference impedance, connected to said node (N) and to said output terminal (Vout); and
- an actuator (ACT) configured to generate a physical quantity, the impedance of said actuator (ACT), or second impedance, being dependent on said physical quantity. Said actuator (ACT) is located along said feedback loop (L), *i.e.* a first terminal of said actuator (ACT) is connected to said internal circuit node (N), and a second terminal of said actuator (ACT) is connected to said output terminal (U). The output signal (Vout) depends on the input signal (Vin), on the reference impedance (Zr) and on the impedance of the actuator (ACT).

In particular, the output signal *Vout* is given by the following equation:

$$Vout = Vin\left(1 + \frac{Zact}{Zr}\right)$$

where *Vin* is the input signal, *Zr* is the reference impedance, and *Zact* is the impedance of the actuator (ACT).

From the previous equation, the impedance of the actuator (ACT) is calculated as hereinbelow:

$$Zact = Zr\frac{Vout - Vin}{Vin}$$

Once the impedance of the actuator (ACT) and the relationship existing between the impedance and physical quantity generated by the same actuator (ACT) are known, such quantity can be calculated as described relative to the first embodiment.

Also, in the second embodiment of the circuit the input signal (Vin) is the sum of a first component, or control signal (Vc), and a second component, or reference signal (Vr). The output signal (Vout) is, in turn, a linear combination of a first component (Vout_r) dependent on the reference signal (Vr), and a second component (Vout_c) dependent on the control signal (Vc). Similarly to what described regarding the first embodiment, assuming to use a filter reducing all the signals different from the second component (Vout_r) of the output signal (Vout), comprising the noise voltage *Vn* of the amplifier (A), the impedance of the actuator (ACT) becomes:

$$Zact = Zr\frac{Vout\_r - Vr}{Vr}$$

where *Vout_r* is the second component of the output signal *Vout,* and *Vr* is the reference signal.

Also in this case, the reference signal (Vr) must have a frequency band ranging between the maximum frequency of the frequency response of the actuator (ACT) and the cut-off frequency of the frequency response of the amplifier (A), and an amplitude dimensioned so that the variation occurred in the quantity to be measured does not exceed the measurement error calculated according to the relationship between the impedance of the actuator (ACT) and physical quantity generated by it.

In Example 1, since the physical quantity G is given by the following equation:

$$G = \frac{Vout\_r - Vr}{Vr}\frac{Zr}{k}$$

the error $\varepsilon$ is given by:

$$\varepsilon = \left| \frac{Vn(Zr + Zact)}{kVr} \right|$$

In Example 2, since the physical quantity $G$ is given by the following equation:

$$G = \frac{Vr}{Vout\_r - Vr} \frac{k}{Zr}$$

the error $\varepsilon$ is given by:

$$\varepsilon = \left| \frac{kVn(Zr + Zact)}{VrZact^2} \right|$$

In Example 3, since the physical quantity $G$ is given by the following equation:

$$G = \frac{Zr(Vout\_r - Vr) - Z_0 Vr}{kZ_0 Vr}$$

the error $\varepsilon$ is given by:

$$\varepsilon = \left| \frac{Vn(Zr + Zact)}{kVrZ_0} \right|$$

In Example 4, since the physical quantity $G$ is given by the following equation:

$$G = \frac{Z_0 Vr - Zr(Vout\_r - Vr)}{kZr(Vout\_r - Vr)}$$

the error $\varepsilon$ is given by:

$$\varepsilon = \left| \frac{Z_0 Vn(Zr + Zact)}{kVrZact^2} \right|$$

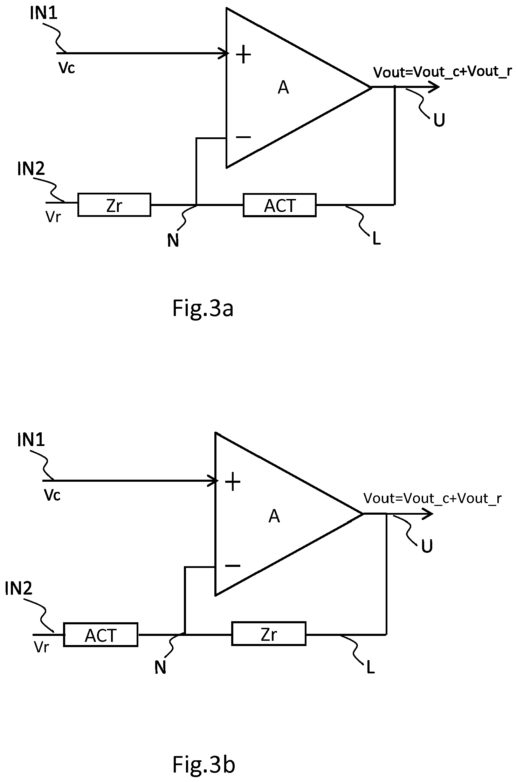

With reference to Figure 3a, a third embodiment of the circuit not part of the present invention comprises:

- a first input terminal (IN1) configured to receive a first input signal (Vc);
- an output terminal (U) configured to issue an output signal (Vout);
- a feedback loop (L) that connects an internal circuit node (N) to said output terminal (U);
- an amplifier (A) having a first terminal, or non-inverting terminal, connected to the first input terminal (IN1), and a second terminal, or inverting terminal, connected to the node (N), said amplifier (A) being configured to receive in input said first input signal (Vin) and to generate in output said output signal (Vout);

- a second input terminal (IN2) configured to receive a second input signal or reference signal (Vr);
- a first impedance (Zr), or reference impedance, connected to said node (N); and
- an actuator (ACT) configured to generate a physical quantity, the impedance of said actuator (ACT), or second impedance, being dependent on said physical quantity.

Said actuator (ACT) is located along said feedback loop (L), *i.e.* a first terminal of said actuator (ACT) is connected to said internal circuit node (N), and a second terminal of said actuator (ACT) is connected to said output terminal (U). The output signal (Vout) depends on the input signal (Vin), on the reference impedance (Zr) and on the impedance of the actuator.

The output signal (Vout) is a linear combination of a first component (Vout_r) dependent on the second input signal (Vr), and a second component (Vout_in) dependent on the first input signal (Vc). Assuming to use a filter reducing all the signals different from the second component (Vout_r) of the output signal (Vout), comprising the noise voltage Vn of the amplifier (A), the impedance of the actuator (ACT) is given by:

$$Zact = \frac{ZrVout\_r}{Vr}$$

where *Vout_r* is the second component of the output signal (Vout) and Vr is the second input signal or reference signal.

Also, in this case, the reference signal (Vr) must have a frequency band ranging between the maximum frequency of the frequency response of the actuator (ACT) and the cut-off frequency of the frequency response of the amplifier (A), and an amplitude dimensioned so that the variation occurred in the quantity to be measured does not exceed the measurement error calculated according to the relationship between the impedance of the actuator (ACT) and physical quantity generated by it.

In Example 1, since the physical quantity $G$ is given by the following equation:

$$G = -\frac{Vout\_r}{Vr} \frac{Zr}{k}$$

the error $\varepsilon$ is given by:

$$\varepsilon = \left| \frac{Vn(Zr + Zact)}{kVr} \right|$$

In Example 2, since the physical quantity $G$ is given by the following equation:

$$G = -\frac{Vr}{Vout\_r}\frac{k}{Zr}$$

the error $\varepsilon$ is given by:

$$\varepsilon = \left|\frac{kVn(Zr + Zact)}{VrZact^2}\right|$$

In Example 3, since the physical quantity $G$ is given by the following equation:

$$G = -\frac{ZrVout\_r - VrZ_0}{kVrZ_0}$$

the error $\varepsilon$ is given by:

$$\varepsilon = \left|\frac{Vn(Zr + Zact)}{kVrZ_0}\right|$$

In Example 4, since the physical quantity $G$ is given by the following equation:

$$G = -\frac{VrZ_0 - ZrVout\_r}{kZrVout\_r}$$

the error $\varepsilon$ is given by:

$$\varepsilon = \left|\frac{Z_0Vn(Zr + Zact)}{kVrZact^2}\right|$$

With reference to Figure 3b, a fourth embodiment of the circuit, representing an embodiment of the present invention, comprises:

- a first input terminal (IN1) configured to receive a first input signal (Vc);
- an output terminal (U) configured to issue an output signal (Vout);
- a feedback loop (L) that connects an internal circuit node (N) to said output terminal (U);
- an amplifier (A) having a first terminal, or non-inverting terminal, connected to the first input terminal (IN1), and a second terminal, or inverting terminal, connected to the node (N), said amplifier (A) being configured to receive in input said first input signal (Vc) and to generate in output said output signal (Vout);
- a second input terminal (IN2) configured to receive a second input signal or reference signal (Vr);
- a first impedance (Zr), or reference impedance, connected to said node (N) and to said output terminal (Vout); and

- an actuator (ACT) configured to generate a physical quantity, the impedance of said actuator (ACT), or second impedance, being dependent on said physical quantity.

A first terminal of said actuator (ACT) is connected to said internal circuit node (N), and a second terminal of said actuator (ACT) is connected to said second input terminal (IN2). The output signal (Vout) depends on the input signal (Vin), on the reference impedance (Zr) and on the impedance of the actuator (ACT).

The output signal (Vout) is a linear combination of a first component (Vout_r) dependent on the second input signal (Vr), and a second component (Vout_in) dependent on the first input signal (Vc). Assuming to use a filter reducing all the signals different from the second component (Vout_r) of the output signal (Vout), comprising the noise voltage Vn of the amplifier (A), the impedance of the actuator (ACT) is given by:

$$Zact = \frac{ZrVout\_r}{Vr}$$

where *Vout_r* is the second component of the output signal (Vout) and Vr is the reference signal.

Also in this case, the reference signal (Vr) must have a frequency band ranging between the maximum frequency of the frequency response of the actuator (ACT) and the cut-off frequency of the frequency response of the amplifier (A), and an amplitude dimensioned so that the variation occurred in the quantity to be measured does not exceed the measurement error calculated according to the relationship between the impedance of the actuator (ACT) and physical quantity generated by it.

In Example 1, since the physical quantity G is given by the following equation:

$$G = -\frac{Vr}{Vout\_r}\frac{Zr}{k}$$

the error $\varepsilon$ is given by:

$$\varepsilon = \left|\frac{VnZact(Zr + Zact)}{kVrZr}\right|$$

In Example 2, since the physical quantity $G$ is given by the following equation:

$$G = -\frac{Vout\_r}{Vr}\frac{k}{Zr}$$

the error $\varepsilon$ is given by:

$$\varepsilon = \left| \frac{kVn(Zr + Zact)}{VrZrZact} \right|$$

In Example 3, since the physical quantity *G* is given by the following equation:

$$G = -\frac{VrZr - Z_0Vout\_r}{kZ_0Vout\_r}$$

the error $\varepsilon$ is given by:

$$\varepsilon = \left| \frac{VnZact(Zr + Zact)}{kVrZrZ_0} \right|$$

In Example 4, since the physical quantity *G* is given by the following equation:

$$G = -\frac{Z_0Vout\_r - VrZr}{kVrZr}$$

the error $\varepsilon$ is given by:

$$\varepsilon = \left| \frac{Z_0Vn(Zr + Zact)}{kVrZrZact} \right|$$

A variant of the fourth embodiment, outside the scope of the present invention, does not provide the second input terminal (IN2) and, therefore, does not provide for the presence of a reference signal. Such a variant provides, instead, a switch which opens and closes the actuator (ACT) to the ground.

In this case, the output signal (Vout) depends on the first input signal (Vin), the reference impedance (Zr), the impedance of the actuator (ACT), and the switch status which enables the current flow through the actuator (ACT). In this case, when the switch is open, the output signal (Vout) is equal to the first input signal (Vin); when, on the other hand, the switch is closed, the output signal *Vout* it is given by:

$$Vout = Vin\left(1 + \frac{Zr}{Zact}\right)$$

The impedance *Zact* of the actuator (ACT) is therefore given by:

$$Zact = Zr\frac{Vin}{Vout}$$

The method of the present invention implemented by the inventive fourth circuit embodiment described above, comprises the following steps:

- measuring the output signal (Vout) of the electronic circuit of the present invention, according to what described above;
- calculating the impedance (Zact) of the actuator (ACT) according to said output signal (Vout);
- calculating said physical quantity according to the impedance (Zact) of the actuator (ACT).

The step of calculating said physical quantity according to the impedance (Zact) of the actuator (ACT) can be carried out, preferably but not exclusively, by means of the relationships between the impedance of the actuator and the physical quantity generated by it cited in Examples 1 to 4, and reported hereinafter for greater clarity:

Example 1

$Zact = kG;$

Example 2

$$Zact = k/G;$$

Example 3

$$Zact = Z_0(1 + kG);$$

Example 4

$$Zact = Z_0/(1 + kG).$$

Said step of calculating the impedance (Zact) of the actuator (ACT) and said step of calculating the physical quantity are carried out by a processor by implementing the above-described formulae by means of a suitable computer program.

An important application of the present invention concerns the deformable mirrors for adaptive optics of terrestrial telescopes. Such mirrors typically comprise a plurality of actuators that induce their deformation, so as to compensate for the atmosphere aberrations. In the new-generation mirrors, such actuators must be miniaturized along with the circuits associated therewith. Hence, the impossibility of using sensors to control the mechanical deformation of mirrors induced by actuators, and the consequent opportunity of using the circuit of the present invention to measure such deformation.

Deformable mirrors are essentially of two types: piezoelectrically-actuated mirrors and magnetically-actuated mirrors.

The mirrors of the first type include:

- a non-deformable base (1);
- a deformable optical plate (3) having a first surface (3') and a second surface (3"), said first surface (3') being reflective and said second surface (3") being non-reflective;
- a plurality of actuators (2, 2', 2") positioned on said base (1), said actuators (2, 2', 2") being configured to generate a mechanical deformation of said optical plate (6).

The first end of each of said plurality of piezoelectric actuators (2, 2', 2"), is connected to an electronic circuit according to the present invention, and the second end of each of said plurality of piezoelectric actuators (2, 2', 2") is electrically connected according to said optical plate (3).

The mirrors of the second type include:

- a non-deformable base (4);
- a deformable optical plate (6) having a first surface (6') and a second surface (6"), said first surface (6') being reflective and said second surface (6") being non-reflective;
- a plurality of magnetic actuators (5, 5') positioned on said base (4), said actuators (5, 5') being configured to generate a mechanical deformation of said optical plate (6);
- a plurality of permanent magnets (7, 7'), the first end of each of said permanent magnets (7, 7') being connected to said plate (6,) and the second end of each of said permanent magnets (7, 7') being configured to interact with said plurality of magnetic actuators (5, 5').

The present invention achieves the intended purposes of overcoming the drawbacks complained in the prior art. Even in those situations in which, for miniaturisation reasons either for economic reasons, it is impossible to use the sensors, achieving a measure of physical quantity generated by the actuator and control such closed loop actuator still becomes possible thanks to the circuit and method of the present invention, therefore, it is possible achieving a measure of the physical quantity generated by the actuator and controlling such closed loop actuator. In this way, equal performance in terms of both speed and accuracy are obtained, compared to circuits where, instead, the sensor is present. In addition, the invention subject of the patent application is applicable also to those control systems of the physical quantity generated by an actuator, which could theoretically benefit from the presence of real sensors. In these cases, the present invention, replacing the function performed by the real sensor with a method that provides calculation steps carried out by one processor, allows increasing the reliability of the entire system.

**Claims**

1. An electronic circuit comprising:

   - a first input terminal (IN1) configured to receive a first input signal (Vin);
   - an output terminal (U) configured to issue an output signal (Vout);
   - a feedback loop (L) connecting an internal circuit node (N) with said output terminal (U);
   - an amplifier (A) having a first terminal, or non-inverting terminal, connected to the first input terminal (IN1) and a second terminal, or inverting terminal, connected to the node (N), said amplifier (A) being configured to receive in input said first input signal (Vin) and to generate in output said output signal (U);
   - a first impedance (Zr), or reference impedance, connected to said node (N) and to said output terminal (U) along said feedback loop (L); and
   - an actuator (ACT) configured to generate a physical quantity, the impedance of said actuator (ACT), or second impedance, being dependent on said physical quantity;

   wherein said actuator (ACT) is connected to said internal circuit node (N) in such a way that the output signal (Vout) depends on the input signal (Vin), on the reference impedance (Zr) and on the physical quantity;
   **characterized in that** said electronic circuit comprises a second input terminal (IN2) configured for receiving a second input signal (Vr),
   and **in that** said actuator (ACT) is connected to said second input terminal (IN2).

2. The electronic circuit according claim 1, wherein said first input signal (Vin) is the sum of a first component, or control signal (Vc), and a second component or reference signal (Vr), said reference signal (Vr) having a frequency band ranging from the maximum frequency of the frequency response of the actuator (ACT) and the cut-off frequency of the frequency response of the amplifier (A).

3. The electronic circuit according to the preceding claim, wherein the lower limit of the frequency band of the reference signal (Vr) is at least twice the maximum frequency of the frequency response of the actuator (ACT).

4. The electronic circuit according to claim 2 or 3, wherein the reference signal (Vr) has an amplitude such as not to cause a variation of the physical quantity generated by the actuator (ACT) higher than the measurement error of this quantity.

5. The electronic circuit according to claim 4, wherein the impedance (Zact) of said actuator (ACT) is given by the following equation:

$$Zact = -\frac{VrZr}{Vout\ r}$$

the output signal *Vout* being a linear combination of a first component *Vout_r* depending on the reference signal *Vr*, and a second component *Vout_c* depending on the control signal *Vc.*

6. A method for the measurement of a physical quantity generated by an actuator (ACT) comprising the following steps:

   - measuring the output signal (Vout) of an electronic circuit according to any of the preceding claims;
   - calculating the impedance of said actuator (ACT) based on said output signal (Vout); and
   - calculating said physical quantity based on the impedance of the actuator (ACT).

7. The method according to the preceding claim, wherein the step of calculating said physical quantity is carried out using an equation selected among the following equations:

   -

   $$Zact = kG;$$

   -

   $$Zact = k/G$$

   -

   $$Zact = Z_0(1 + kG);$$

   or

   -

   $$Zact = Z_0/(1 + kG);$$

   where *Zact* is the impedance of the actuator (ACT), Zo is a constant, *k* is a constant and G is the physical quantity generated by the actuator (ACT).

8. The method according to the preceding claim, wherein said step of calculating the impedance of the actuator (ACT) and said step of calculating the physical quantity are carried out by a processor.

**Patentansprüche**

1. Elektronische Schaltung bestehend aus:

   - einem ersten Eingangsanschluss (IN1), der zum Empfangen eines ersten Eingangssignals (Vin) konfiguriert ist;
   - einem Ausgangsanschluss (U), der zum Senden eines Ausgangssignals (Vout) konfiguriert ist;
   - eine Rückkopplungsschaltung (L), die einen inneren Schaltungsknoten (N) mit dem Ausgangsanschluss (U) verbindet;
   - einen Verstärker (A) mit einem ersten Anschluss oder mit einem nicht-invertierenden Anschluss, der mit dem ersten Eingangsanschluss (IN1), und mit einem zweiten Anschluss oder mit einem invertierenden Anschluss, der mit dem Knoten (N) verbunden ist, wobei der Verstärker (A) konfiguriert ist, um das erste Eingangssignal (Vin) am Eingang zu empfangen und das Ausgangssignal (U) am Ausgang zu erzeugen;
   - eine erste Impedanz (Zr) oder Referenzimpedanz, die mit dem Knoten (N) und dem Ausgangsanschluss (U) entlang der Rückkopplungsschaltung (L) verbunden ist; und
   - einen Aktuator (ACT), der konfiguriert ist, um eine physikalische Menge, wobei die Impedanz des Aktuators (ACT) oder die zweite Impedanz ist abhängig von der physikalischen menge, zu erzeugen;

   wobei das Stellglied (ACT) ist derart mit dem inneren Schaltungsknoten (N) verbunden, dass das Ausgangssignal (Vout) von dem Eingangssignal (Vin), von der Referenzimpedanz (Zr) und von der physikalischen Menge abhängig ist;
   **dadurch gekennzeichnet, dass** die elektronische Schaltung einen zweiten Eingangsanschluss (IN2) umfasst, der konfiguriert ist, um ein zweites Eingangssignal (Vr) zu empfangen,
   und dass der Aktuator (ACT) mit dem zweiten Eingangsanschluss (IN2) verbunden ist.

2. Elektronische Schaltung nach Anspruch 1, wobei das erste Eingangssignal (Vin) ist die Summe aus einer ersten Komponente ist, oder Steuersignal (Vc) und einer zweiten Komponente oder Referenzsignal (Vr), wobei das Referenzsignal (Vr) einen Frequenzband aufweist, die zwischen der maximalen Frequenz der Antwortfrequenz des Aktuators (ACT) und der Schnittfrequenz der Antwortfrequenz des Verstärkers (A) liegt.

3. Elektronische Schaltung nach dem vorhergehenden Anspruch, wobei die untere Grenze der Antwortfrequenz des Referenzsignals (Vr) mindestens gleich der doppelten Maximalfrequenz der Antwortfrequenz des Aktuators (ACT) ist.

4. Elektronische Schaltung nach Anspruch 2 oder 3, wobei das Referenzsignal (Vr) eine Amplitude aufweist, die nicht eine Variation der physikalische Menge, die von dem Aktuator (ACT) erzeugt wird, verursacht, größer ist als der Messfehler von dieser Menge.

5. Elektronische Schaltung nach Anspruch 4, wobei die Impedanz (Zact) des Aktuators (ACT) durch die folgende Gleichung gegeben ist:

$$Zact = \frac{VrZr}{Vout\_r}$$

wobei das Ausgangssignal $Vout$ ist eine lineare Kombination einer ersten Komponente $Vout\_r$ in Abhängigkeit vom Referenzsignal Vr und einer zweiten Komponente $Vout\_c$ in Abhängigkeit vom Steuersignal $Vc$.

6. Verfahren zum Messen einer von einem Aktuator (ACT) erzeugten physikalischen Menge, das die folgenden Schritte aufweist:

- Messung des Ausgangssignals (Vout) einer elektronischen Schaltung gemäß einem der vorhergehenden Ansprüche;
- Berechnung der Impedanz des Aktuators (ACT) anhand des Ausgangssignals (Vout); und
- Berechnung der physikalischen Menge in Abhängigkeit von der Impedanz des Aktuators (ACT).

7. Verfahren nach dem vorhergehenden Anspruch, wobei der Schritt der Berechnung der physikalischen Menge unter Verwendung einer Gleichung ausgeführt wird, die aus den folgenden Gleichungen ausgewählt ist:

-

$$Zact = kG \; ;$$

-

$$Zact = k/G \; ;$$

-

$$Zact = Z_0(1 + kG) ;$$

oder

-

$$Zact = Z_0 (1 + kG ) ;$$

wobei $ZACT$ ist die Impedanz des Aktuators (ACT), $Zo$ ist eine Konstante, $k$ ist eine Konstante, und G ist die physikalische Menge die vom Aktuator (ACT) erzeugt wird.

8. Verfahren nach dem vorhergehenden Anspruch, wobei der Schritt der Berechnung der Impedanz des Aktuators (ACT) und der Schritt der Berechnung der physikalischen Menge mittels eines Prozessors ausgeführt werden.

**Revendications**

1. Circuit électronique comprenant:

- une première borne d'entrée (IN1) configurée pour recevoir un premier signal d'entrée (Vin);
- une borne de sortie (U) configurée pour émettre un signal de sortie (Vout);
- un circuit de rétroaction (L) qui relie un nœud de circuit interne (N) à la borne de sortie (U);
- un amplificateur (A) avec une première borne, ou borne sans inversion, connectée à la première borne d'entrée (IN1) et une deuxième borne, ou borne d'inversion, connectée au nœud (N), l'amplificateur (A) étant configuré pour recevoir le premier signal d'entrée (Vin) en entrée et pour générer le signal de sortie (U) en sortie;
- une première impédance (Zr), ou impédance de référence connectée au nœud (N) et à la borne de sortie (U) le long du circuit de rétroaction (L); et
- un actionneur (ACT) configuré pour générer une quantité physique, l'impédance de l'actionneur (ACT), ou deuxième impédance, dépendant de la quantité physique;

dans lequel l'actionneur (ACT) est connecté au nœud du circuit interne (N), de sorte que le signal de sortie (Vout) dépend du signal d'entrée (Vin), de l'impédance de référence (Zr) et de la quantité physique; **caractérisé en ce que** le circuit électronique comprend une deuxième borne d'entrée (IN2) configurée pour recevoir un deuxième signal d'entrée (Vr),
et que l'actionneur (ACT) est connecté à la deuxième borne d'entrée (IN2).

2. Circuit électronique selon la revendication 1, dans lequel le premier signal d'entrée (Vin) est la somme d'un premier composant, ou signal de commande (Vc), et d'un deuxième composant ou signal de référence (Vr), le signal de référence (Vr) ayant une bande de fréquence entre la fréquence maximale de la réponse en fréquence de l'actionneur (ACT) et la fréquence d'interception de la réponse en fréquence de l'amplificateur (A).

3. Circuit électronique selon la revendication précédente, dans lequel la limite inférieure de la bande de fréquence du signal de référence (Vr) est au moins égale au double de la fréquence maximale de la réponse en fréquence de l'actionneur (ACT).

4. Circuit électronique selon la revendication 2 ou 3, dans lequel le signal de référence (Vr) a une amplitude qui ne provoque pas de variation de la quantité physique générée par l'actionneur (ACT), supérieure à l'erreur de mesure de cette quantité.

5. Circuit électronique selon la revendication 4, dans lequel l'impédance (Zact) de l'actionneur (ACT) est donnée par l'équation suivante:

$$Zact = \frac{VrZr}{Vout\_r}$$

le signal de sortie *Vout* étant une combinaison linéaire d'un premier composant *Vout_r* dépendant du signal de référence Vr, et d'un deuxième composant *Vout_c* dépendant du signal de commande Vc.

6. Procédé de mesure d'une quantité physique générée par un actionneur (ACT) comprenant les opérations suivantes :

    - mesure du signal de sortie (Vout) d'un circuit électronique selon l'une des revendications précédentes;
    - calcul de l'impédance de l'actionneur (ACT) sur la base du signal de sortie (Vout); et
    - calcul de la quantité physique en fonction de l'impédance de l'actionneur (ACT).

7. Procédé selon la revendication précédente, dans lequel l'opération de calcul de la quantité physique est effectuée à l'aide d'une équation choisie parmi les équations suivantes:

-

$$Zact = kG \; ;$$

-

$$Zact = k/G \; ;$$

-

$$Zact = Z_0(1+kG);$$

ou

-

$$Zact = Z_0(1+kG);$$

où *Zact* est l'indépendance de l'actionneur (ACT), Zo est une constante, *k* est une constante et G est la quantité physique générée par l'actionneur (ACT).

8. Procédé selon la revendication précédente, dans lequel l'opération de calcul d'impédance d'actionneur (ACT) et l'opération de calcul de quantité physique sont effectuées au moyen d'un processeur.

Fig.1

IN1

Vin = Vc + Vr

+

A

−

Vout=Vout_c+Vout_r

U

ACT

Zr

N

L

Fig.2a

IN1

Vin = Vc + Vr

+

A

−

Vout=Vout_c+Vout_r

U

Zr

ACT

N

L

Fig.2b

IN1

Vc

+

A

−

Vout=Vout_c+Vout_r

U

IN2

Vr

Zr

N

ACT

L

Fig.3a

IN1

Vc

+

A

−

Vout=Vout_c+Vout_r

U

IN2

Vr

ACT

N

Zr

L

Fig.3b

Fig.4a

Fig.4b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4841191 A
- WO 2016198639 A1
- US 20020084717 A1